# EUROPEAN PATENT APPLICATION

(11) **EP 4 664 533 A1**
(43) Date of publication of application: **17.12.2025**
(21) Application number: 24826206.5
(22) Date of filing: 17.06.2024
(51) Int. Cl.: H01M 4/04, H01M 10/04, B65H 43/04

(54) **SYSTEM FOR MANUFACTURING SECONDARY BATTERY AND METHOD FOR MANUFACTURING SECONDARY BATTERY**

(30) Priority: 19.06.2023 KR 20230078372
(71) Applicant: LG Energy Solution, Ltd., Seoul 07335 (KR)
(72) Inventor: PARK, Su Wan, Daejeon 34122 (KR); JEON, Gi Yeong, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/008286
(87) International publication number: WO 2024/262889

(57) **Abstract**

Example embodiments provide a secondary battery manufacturing system. The secondary battery manufacturing system includes a server configured to store a roll map including defect data indicating a defect of an electrode roll and datum point data indicating a datum point on the electrode roll, a controller configured to load the defect data and the datum point data from the server, and a datum point sensor configured to generate a datum point sensing signal by sensing the datum point on an electrode sheet unwound from the electrode roll, in which the controller is configured to generate datum point sensing data based on the datum point sensing signal and compare the datum point data with the datum point sensing data.

## Description

### [Technical Field]

The present invention relates to a secondary battery manufacturing system and a secondary battery manufacturing method. The present application claims the benefit of priority based on Korean Patent Application No. 10-2023-0078372, filed on June 19, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system for performing a manufacturing process of a secondary battery based on a roll map including information about quality and defects in an electrode manufacturing process, and a secondary battery manufacturing method using the same.

### [Technical Solution]

Embodiments of the present invention provide a secondary battery manufacturing system. The secondary battery manufacturing system includes a server configured to store a roll map including defect data indicating a defect of an electrode roll and datum point data indicating a datum point on the electrode roll, a controller configured to load the defect data and the datum point data from the server, and a datum point sensor configured to generate a datum point sensing signal by sensing the datum point on an electrode sheet unwound from the electrode roll, in which the controller is configured to generate datum point sensing data based on the datum point sensing signal and compare the datum point data with the datum point sensing data.

The defect data may include a start coordinate of the defect and an end coordinate of the defect, the datum point data may include a stored coordinate of the datum point, and the datum point sensing data may include a sensed coordinate of the datum point.

The controller may be configured to calibrate the defect data based on the datum point data and the datum point sensing data.

The controller may be configured to calculate an offset between the stored coordinate of the datum point and the sensed coordinate of the datum point.

The controller may be configured to calibrate the start coordinate of the defect and the end coordinate of the defect based on the offset.

The secondary battery manufacturing system may further include a roll map controller configured to receive the datum point sensing data and transmit the datum point sensing data to the controller.

The datum point sensor may be configured to transmit the datum point sensing data to the controller.

According to example embodiments provide a secondary battery manufacturing method. The secondary battery manufacturing method includes loading defect data indicating a defect of an electrode roll and datum point data indicating a datum point on the electrode roll, sensing the datum point on an electrode sheet unwound from the electrode roll to collect datum point sensing data, and calibrating the defect data based on the datum point data and the datum point sensing data to generate calibrated defect data.

The secondary battery manufacturing method may further include discarding a portion of the electrode sheet based on the calibrated defect data.

The defect data may include a coordinate of the defect, the datum point data may include a stored coordinate of the datum point, and the datum point sensing data may include a sensed coordinate of the datum point.

The calibrating of the defect data may include calculating an offset between the stored coordinate of the datum point and the sensed coordinate of the datum point.

The calibrating of the defect data may include calibrating a start coordinate and end coordinate of the defect data based on the offset.

### [Advantageous Effects]

Example embodiments of the present invention provide a system configured to generate a roll map enabling feedback, feedforward, and tracking of an electrode process and perform a secondary battery manufacturing process based on the roll map, and a secondary battery manufacturing method using the same.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 is a flowchart of a secondary battery manufacturing method according to example embodiments.
FIG. 3 illustrates a secondary battery manufacturing system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

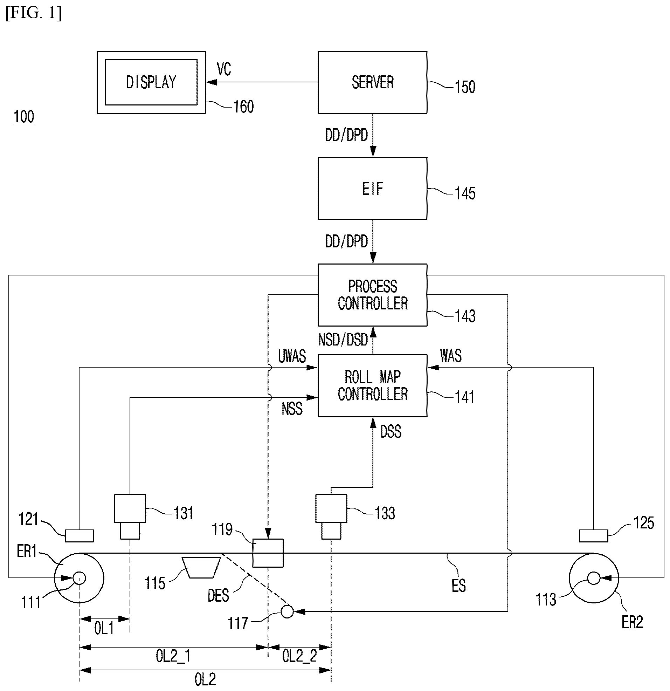

FIG. 1 illustrates a secondary battery manufacturing system 100 according to example embodiments.

Referring to FIG. 1, the secondary battery manufacturing system 100 may include an unwinder 111, a rewinder 113, a splicing table 115, a scrap port 117, a processing apparatus 119, a first rotary encoder 121, a second rotary encoder 125, an NG sensor 131, a datum point sensor 133, a roll map controller 141, a process controller 143, an equipment interface (EIF) 145, a server 150, and a display device 160.

The secondary battery manufacturing system 100 may be configured to generate a roll map including data about an electrode sheet ES. The roll map may represent the electrode sheet ES based on coordinates indicating a position on the electrode sheet ES. A secondary battery manufacturing process may be performed on the electrode sheet ES as described below. The roll map may include data that represents a history of processes performed on the electrode sheet ES and is related to coordinates. Accordingly, the roll map enables feedback, feedforward, and tracking of a secondary battery manufacturing process as described below.

A first electrode roll ER1 on which a previous process is performed may be loaded into the unwinder 111. The unwinder 111 may unwind the electrode sheet ES from the first electrode roll ER1. The rewinder 113 may wind the electrode sheet ES to form a second electrode roll ER2. The electrode sheet ES may be wound into the second electrode roll ER2 and be cut and separated after a certain winding length is reached. Accordingly, the electrode sheet ES may be moved between the unwinder 111 and the rewinder 113 while a current process is performed.

Roll maps may be generated in units of lots. A lot is a production unit of the roll-to-roll process, and the second electrode roll ER2 separated to be exported after a target winding amount is reached is an example of the lot. The first electrode roll ER1 newly loaded on the unwinder 111 is also an example of a lot. Accordingly, the server 150 may store a first roll map of a previous process. The first roll map may correspond to the first electrode roll ER1. In addition, the server 150 may generate and store a second roll map of a current process. The second roll map may correspond to the second electrode roll ER2.

A process of manufacturing a secondary battery (e.g., an electrode process) may be performed on the electrode sheet ES. The electrode process is performed on the electrode sheet ES unwound from the first electrode roll ER1 and wound into the second electrode roll ER2 and thus may be referred to as a roll-to-roll process.

In a roll map, time series data constructed over time (i.e., according to the progress of a process) may be related to coordinate data based on the amount of movement of the electrode sheet ES (i.e., the amount of exhaustion or the amount of input).

For example, a first roll map may include defect data DD indicating defects of the first electrode roll ER1 and datum point data DPD indicating datum points. The defect data DD may include defect values indicating whether there are defects in the first electrode roll ER1 and the types of defects and coordinates matching the defect values. Table 1 below shows examples of the defect data DD.

**[Table 1]**

| Start coordinate m | End coordinate m | Type of defect |
|---|---|---|
| 130 | 150 | 154 |
| 750 | 800 | 171 |

The numerical values in the third column (i.e., "154" and "171") are code numbers indicating the types of defects. The types of defects may further include a surface defect, such as a pinhole defect, a line defect, a crater defect, a crack defect, a side ring defect, an island defect, a folding defect, a wrinkle defect, a dent defect, and a scratch defect. The types of defects may further include defect determined based on measurement data, such as mismatch, an excessive loading amount, an insufficient loading amount, an excessive thickness, an insufficient thickness, insulation coating, and an overlay of a coated lane. The datum point data DPD may include sequence values indicating a sequence of the datum points on the electrode sheet ES, and coordinates matching the sequence values. Table 2 below shows examples of the datum point data DPD.

**[Table 2]**

| Sequence | Stored coordinate m |
|---|---|
| 15 | 120 |
| 14 | 240 |
| 13 | 360 |
| 12 | 480 |
| 11 | 600 |
| 10 | 720 |
| 9 | 840 |
| 8 | 960 |
| 7 | 1080 |
| 6 | 1200 |
| 5 | 1320 |
| 4 | 1440 |
| 3 | 1560 |
| 2 | 1680 |
| 1 | 1800 |

The datum points may be formed at equal intervals on the electrode sheet ES. In Table 2, an interval between the datum points is about 120m but is provided as example, and the technical idea of the present invention should not be understood as being limited thereto in any sense. The interval between the datum points may be determined according to a requirement for precision of tracking process events on the electrode sheet ES. A posterior datum point may be formed later than an anterior datum point. The posterior datum point is wound as an outside the first electrode roll ER1 and thus may be assigned a relatively small coordinate when the first electrode roll ER1 is unwound. After the datum point data DPD is collected, coordinates (i.e., start coordinates and end coordinates) of the datum point data DPD may be converted as the electrode sheet ES is wound or unwound. A format in which the defect data DD and the datum point data DPD are displayed is not limited to the above table. The defect data DD may be in a format including matching between a defect value (i.e., a type of defect) and a coordinate. The datum point data DPD may be in a format including matching between the sequence of the datum point and the coordinates.

The manufacture of a secondary battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process will be referred to as feedforward.

Here, the workpiece is an article provided as a result of each process, e.g., an electrode sheet of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

An electrode process of a secondary battery includes a series of roll-to-roll processes. For feedforward, time series data should be related to positions on real-world workpieces, components, intermediate products, and products. Here, the feedforward may include controlling a process for the electrode sheet ES based on the roll map of the first electrode roll ER1 generated in the previous process. The roll map may allow time series data to be connected with coordinate data including coordinates of the positions on the real-world workpieces, the components, the intermediate products, and the products. The roll map may provide matching between time series data and the real-world workpieces, the components, the intermediate products, and the products, based on the coordinate data. Accordingly, feedforward based on generation of the roll map and the roll map may improve the efficiency of production and quality by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map. For example, the second roll map of the second electrode roll ER2 may be generated by winding the electrode sheet ES processed in the current process, and processing of a subsequent lot may be controlled based on the second roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in a battery cell on the market, history data of the manufacture of the battery cell may be retrieved based on the cell ID.

The first rotary encoder 121 may be configured to sense the amount of the electrode sheet ES unwound from the first electrode roll ER1 by the unwinder 111. Accordingly, the first rotary encoder 121 may be configured to generate an input amount signal UWAS indicating a length of the electrode sheet ES unwound by the unwinder 111. The first rotary encoder 121 may be configured to transmit the input amount signal UWAS to the roll map controller 141. The roll map controller 141 may be configured to collect input amount data based on the input amount signal UWAS of the electrode sheet ES.

The second rotary encoder 125 may be configured to sense the amount of the electrode sheet ES wound into the second electrode roll ER2 by the rewinder 113. Accordingly, the second rotary encoder 125 may be configured to generate an exhaustion amount signal WAS indicating a length of the electrode sheet ES wound by the rewinder 113. The second rotary encoder 125 may be configured to transmit the exhaustion amount signal WAS to the roll map controller 141. The roll map controller 141 may be configured to collect exhaustion amount data based on the exhaustion amount signal WAS of the electrode sheet ES.

The roll map controller 141 may be configured to collect coordinate data of the electrode sheet ES based on one of the input amount signal UWAS and the exhaustion amount signal WAS of the electrode sheet ES.

For example, the roll map controller 141 may determine a moving distance of the electrode sheet ES from the unwinder 111 based on the input amount signal UWAS of the electrode sheet ES. Accordingly, the roll map controller 141 may be configured to determine a coordinate of a portion of the electrode sheet ES, which is to be unwound by the unwinder 111, on the electrode sheet ES at each point in time when a process is performed by the processing apparatus 119.

As another example, the roll map controller 141 may determine a moving distance of the electrode sheet ES to the rewinder 113 based on the exhaustion amount signal WAS of the electrode sheet ES. Accordingly, the roll map controller 141 may be configured to determine a coordinate of a portion of the electrode sheet ES, which is to be wound by the rewinder 113, on the electrode sheet ES at each point in time when a process is performed by the processing apparatus 119.

Hereinafter, the technical idea of the present invention will be described with respect to an embodiment in which the roll map controller 141 collects the coordinate data based on the input amount signal UWAS of the electrode sheet ES. When coordinate data is collected based on the input amount signal UWAS, the amount of the electrode sheet ES to be unwound may be sensed, loss of the electrode sheet ES caused by a factor, such as a sample test of the first electrode roll ER1, movement of the first electrode roll ER1 from a previous process stage to a current process stage, loading of the first electrode roll ER1 on the unwinder 111, connecting a portion of the electrode sheet ES of the loaded first electrode roll ER1 and a portion of the electrode sheet ES on the rewinder 113, or a remaining amount caused due to inability to unwind the electrode sheet ES, may be exactly determined.

According to example embodiments, the roll map controller 141 may be configured to further collect additional coordinate data based on the exhaustion amount signal WAS. In this case, the coordinate data collected based on the input amount signal UWAS may be used to calibrate the defect data DD and the datum point data DPD transmitted from a roll map of the previous process (i.e., the first roll map of the first electrode roll ER1), and the additional coordinate data collected based on the exhaustion amount signal WAS may be used to generate a roll map of the current process (i.e., a roll map of the completed second electrode roll ER2).

The coordinate data may include a coordinate matching each portion of the electrode sheet ES. That is, arbitrary points on the electrode sheet ES may match a coordinate. The coordinate may be one-dimensional (1D) quantity in a longitudinal direction of the electrode sheet ES but is not limited thereto. The coordinate may be two-dimensional (2D) quantities in the longitudinal direction of the electrode sheet ES and a width direction of the electrode sheet ES.

The NG sensor 131 may be configured to sense one of an NG mark and an NG tag on the electrode sheet ES. The NG mark may be formed by, for example, an inkjet printer or the like and include information about the position and type of a defect. The NG tag may be attached to the electrode sheet ES by an operator or an NG tag attacher and indicate the position of a defect of the electrode sheet ES. As a non-limiting example, the NG sensor 131 may include a vision machine or a color sensor.

The NG sensor 131 may be configured to generate an NG sensing signal NSS to sense one of an NG mark and an NG tag on an electrode sheet. The NG sensor 131 may be configured to transmit the NG sensing signal NSS to the roll map controller 141.

The roll map controller 141 may be configured to collect NG sensing data NSD based on the NG sensing signal NSS and the coordinate data. The roll map controller 141 may be configured to collect the NG sensing data NSD by relating the NG sensing signal NSS with the coordinate data. The NG sensing data NSD may include, for example, a defect value indicating whether there is a defect and an aspect of the defect, and a coordinate matching the defect value.

To collect the NG sensing data NSD, the coordinate data may be calibrated based on an offset length OL1. The calibrating of the coordinate data includes compensating for the difference between a portion of the electrode sheet ES sensed by the first rotary encoder 121, i.e., a portion of the electrode sheet ES wound by the unwinder 111, and a portion of the electrode sheet ES sensed by the NG sensor 131.

According to example embodiments, the roll map controller 141 may calibrate coordinate data collected at the same time as the NG sensing signal NSS based on the offset length OL1 and relate the calibrated coordinate data with the NG sensing signal NSS to collect the NG sensing data NSD.

The offset length OL1 is a length of the electrode sheet ES between the NG sensor 131 and the unwinder 111 according to a moving path of the electrode sheet ES. The offset length OL1 may be equal to or greater than a straight-line distance between the NG sensor 131 and the unwinder 111.

The datum point sensor 133 may be configured to sense datum points on the electrode sheet ES to collect datum point data of the electrode sheet ES. The datum point sensor 133 may include, for example, an OCR barcode reader. Each of the datum points on the electrode sheet ES may include an arbitrary identification mark (e.g., a 1D or 2D barcode) that includes information about a moving direction of the electrode sheet ES and a formed sequence of the datum points in a process of forming the datum points. The datum point sensor 133 may be configured to sense the datum points on the electrode sheet ES to generate a datum point sensing signal DSS. The datum point sensor 133 may be configured to transmit the datum point sensing signal DSS to the roll map controller 141.

The roll map controller 141 may be configured to collect the datum point sensing data DSD based on the coordinate data and the datum point sensing signal DSS. The roll map controller 141 may be configured to collect the datum point sensing data DSD by relating the datum point sensing signal DSS with the coordinate data. The datum point sensing data DSD may include, for example, the sequence of the datum points and coordinates matching the datum points.

To collect the datum point sensing data DSD, the coordinate data may be calibrated based on an offset length OL2. The calibrating of the coordinate data includes compensating for the difference between a portion of the electrode sheet ES sensed by the first rotary encoder 121, i.e., a portion of the electrode sheet ES unwound by the unwinder 111, and a portion of the electrode sheet ES sensed by the datum point sensor 133.

According to example embodiments, the roll map controller 141 may be configured to calibrate coordinate data collected at the same time as the datum point sensing signal DSS based on the offset length OL2 and relate the calibrated coordinate data with the datum point sensing signal DSS to collect the datum point sensing data DSD.

The offset length OL2 is a length of the electrode sheet ES between the datum point sensor 133 and the unwinder 111 according to a moving path of the electrode sheet ES. The offset length OL2 may be equal to or greater than a straight line distance between the datum point sensor 133 and the unwinder 111.

The offset length OL2 may include a first part OL2_1 and a second part OL2_2. The first part OL2_1 may be a part that has not been processed by the processing apparatus 119, and the second part OL2_2 may be a part that has been processed by the processing apparatus 119. Accordingly, length characteristic of the first part OL2_1 may be different from length characteristic of the second part OL2_2. For example, when the processing apparatus 119 includes pressing rolls for the roll pressing process, the first part OL2_1 may not be elongated and the second part OL2_2 may be elongated. According to example embodiments, in the calibrating of the offset length OL2, the first part OL2_1 may be calibrated differently from the second part OL2_2. For example, the second part OL2_2 may be calibrated to compensate for a change in the length characteristics by the processing apparatus 119 through reverse calculation of an elongation rate or the like.

According to example embodiments, the roll map controller 141 may be configured to transmit the NG sensing data NSD and the datum point sensing data DSD to the process controller 143. The process controller 143 may be configured to compare the datum point data DPD with the datum point sensing data DSD. The process controller 143 may be configured to calibrate the defect data DD based on the NG sensing data NSD. The calibrating of the defect data DD based on the NG sensing data NSD may include calibrating coordinates of the defect data DD based on coordinates of the NG sensing data NSD when the coordinates of the defect data DD and the coordinates of the NG sensing data NSD do not match.

Table 3 shows examples of the datum point sensing data DSD.

**[Table 3]**

| Sequence | Sensed coordinate m | Offset |
|---|---|---|
| 15 | 115 | 5 |
| 14 | 235 | 5 |
| 13 | 350 | 10 |
| 12 | 470 | 10 |
| 11 | 590 | 10 |
| 10 | 705 | 15 |
| 9 | 825 | 15 |
| 8 | 945 | 15 |
| 7 | 1065 | 15 |
| 6 | 1180 | 20 |
| 5 | 1300 | 20 |
| 4 | 1420 | 20 |
| 3 | 1540 | 20 |
| 2 | 1660 | 20 |
| 1 | 1780 | 20 |

In Table 3, the first column and the second column may represent the datum point sensing data DSD. A format in which the datum point sensing data DSD is displayed is not limited to the above table. The datum point sensing data DSD may be in a format including matching between the sequence of the datum points and the coordinates. The process controller 143 may be configured to calculate an offset that is a difference between a stored coordinate of the datum point data DPD and a sensed coordinate of the datum point sensing data DSD. In Table 3, the third column represent an offset calculated by the process controller 143. The process controller 143 may be configured to calibrate the defect data DD based on an offset. Table 4 shows defect data calibrated by the process controller 143. The calibrating of the defect data DD may be triggered by sensing of datum points. Although Table 3 displays fifteen datum points at once, the defect data DD may be calibrated whenever a datum point is sensed.

**[Table 4]**

| Calibrated start coordinate m | Calibrated end coordinate m | Type of defect |
|---|---|---|
| 125 | 145 | 154 |
| 735 | 785 | 171 |

More specifically, when a comparison between a sensed coordinate of and a stored coordinate of a datum point reveals that these coordinates are different from each other, the process controller 143 may perform an operation for calculating an offset. For example, when a fifteenth datum point that arrives first is sensed, 115 m that is sensed does not match 120 m that is stored and thus the process controller 143 may calculate 5 m as an offset. Next, a start coordinate '130' of a defect '154' adjacent to the fifteenth datum point may be calibrated to '125' based on an offset value '5'. Next, an end coordinate '150' of the defect '154' adjacent to the fifteenth datum point may be calibrated to '145' based on the offset value '5'. In addition, a start coordinate '750' and an end coordinate '800' of a defect '171' adjacent to a tenth datum point may be calibrated to '735' and '785', respectively, based on an offset value '15'. Unlike Table 4, different offsets may be applied to a start coordinate and end coordinate of a defect according to the position of the defect on the electrode sheet ES. Coordinates of the defect data DD of the roll map of the first electrode roll ER1 and coordinates of a defect of the real electrode sheet ES unwound from the first electrode roll ER1 may not match. Such a mismatch may be caused by a loss due to a sample test of the first electrode roll ER1, a loss occurring during movement of the first electrode roll ER1, a loss occurring during loading of the first electrode roll ER1 on the unwinder 111, connection of the electrode sheet ES of the loaded first electrode roll ER1 and the electrode sheet ES on the rewinder 113, or the like.

According to example embodiments, by calibrating the defect data DD based on the datum point sensing data DSD and the datum point data DPD obtained by sensing actual datum points on the electrode sheet ES, it is possible to prevent a defective portion DES of the electrode sheet ES from being partially discarded or a normal part of the electrode sheet ES from being excessively discarded. In addition, for defects included in the defect data DD, coordinates thereof may be calibrated without NG marks or NG tags to increase the productivity and yield of the electrode sheet ES.

The process controller 143 may be configured to control operations of the unwinder 111, the rewinder 113, the scrap port 117, and the processing apparatus 119. The process controller 143 may be configured to generate a signal for operating or stopping the unwinder 111, the rewinder 113, the scrap port 117 and the processing apparatus 119. The signal for operating or stopping the unwinder 111, the rewinder 113, the scrap port 117, and the processing apparatus 119 may be generated based on a body including a product ID and details of a manufacturing recipe.

The process controller 143 may receive the NG sensing data NSD from the roll map controller 141. The process controller 143 may be configured to generate the signal for operating or stopping the unwinder 111, the rewinder 113, the scrap port 117, and the processing apparatus 119 based on the NG sensing data NSD and calibrated defect data. Here, the calibrated defect data may be generated by the process controller 143 based on the datum point data DPD, the datum point sensing data DSD, and the defect data DD as described above.

When a defect on the electrode sheet ES identified by the calibrated defect data or the NG sensing data NSD approaches the splicing table 115, the process controller 143 may reduce a speed of movement of the electrode sheet ES or stop winding and unwinding performed by the unwinder 111 and the rewinder 113.

After a start point on the defect (or, considering the process margin, a point adjacent to the start point of the defect) is cut on the splicing table 115, the scrap port 117 may be configured to wind the defective portion DES of the electrode sheet ES as indicated by a thick dashed line. After the defective part DES of the electrode sheet ES is sufficiently wound by the scrap port 117, a portion of the electrode sheet ES connected to the scrap port 117 and the portion of the electrode sheet ES connected to the unwinder 111 may be separated from each other. Next, a current process may be continued by connecting the portion of the electrode sheet ES connected to the unwinder 111 and the portion of the electrode sheet ES connected to the rewinder 113. The portion of the electrode sheet ES connected to the unwinder 111 and the portion of the electrode sheet ES connected to the rewinder 113 may be connected on the splicing table 115.

The processing apparatus 119 may be located downstream of the flow of the electrode sheet ES than the splicing table 115. That is, the processing apparatus 119 may be configured to process the electrode sheet ES, the defective portion DES of which is processed on the splicing table 115 to be discarded.

For example, the processing apparatus 119 may include a9 coater, and the electrode sheet ES may be coated with an electrode slurry. As another example, the processing apparatus 119 may include pressing rolls, and the roll pressing process may be performed on the electrode sheet ES coated with the electrode slurry. As another example, the processing apparatus 119 may include a slitting knife, and the electrode sheet ES may be separated into a plurality of electrode sheets.

The secondary battery manufacturing system 10 may further include a measuring device and an inspector. The measuring device may be configured to measure the electrode sheet ES to collect measurement data of the electrode sheet ES. The measuring device may measure the electrode sheet ES by a scanning method. The measurement data may include a plurality of measured values expressed numerically. For example, the measurement data may include size data, e.g., a thickness and a width, of the electrode sheet ES, data of the amount of loading a coating material on the electrode sheet ES, size data, e.g., a width of an insulating material on the coating material and an overlapping width between the coating material and the insulating material, mismatch data between coated lanes on an upper surface of the electrode sheet ES and coated lanes on a lower surface of the electrode sheet ES, and the like. Here, the amount of loading is the amount of the coating material loaded per unit area of the electrode sheet ES, and may be an area density of the coating material.

Whether a measured portion of the electrode sheet ES is defective or not may be determined by processing the measurement data by a set method. When an amount of a measured coating material on the electrode sheet ES (e.g., the amount of loading on the electrode sheet ES or a thickness of the electrode sheet ES) is in a set range including upper and lower limits, a corresponding portion of the electrode sheet ES may be determined as a good-quality portion. The corresponding portion of the electrode sheet ES may be determined as defective, when the amount of the measured coating material on the electrode sheet ES (e.g., the amount of loading on the electrode sheet ES or the thickness of the electrode sheet ES) is less than the lower limit or greater than the upper limit.

The measuring device may include, for example, a time delay and integration (TDI) camera, a complementary metal oxide semiconductor (CMOS) image sensor, and a time-of-flight (TOF) sensor. The measuring device may include an emitter and a receiver that are configured to perform measurement using non-destructive signals such as ultrasound waves, microwaves, terahertz waves, or infrared rays. The measuring device may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a visible light and infrared sensor, a camera, etc.

The measuring device may be configured to generate coordinate-related measurement data by relating additional coordinate data based on the exhaustion amount signal WAS with the measurement data. To generate the coordinate-related measurement data, the additional coordinate data may be calibrated based on an offset length of the measurement data.

The measuring device may be configured to collect evaluation data based on the measurement data. The evaluation data may be collected based on a comparison between measured values of multiple sections in the electrode sheet ES and a set range.

For example, a measured value (or an average of measured values) that is in a first range may be determined as normal, a measured value (or an average of measured values) that is in a second range greater than the first range may be determined as excessive, a measured value (or an average of measured values) that is in a third range greater than the second range may be determined as very excessive, a measured value (or an average of measured values) that is in a fourth range less than the first range may be determined as insufficient, and a measured value (or an average of measured values) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

Evaluation values of the evaluation data may be related to coordinates. For example, each of the evaluation values may match a start coordinate and end coordinate of a portion of the electrode sheet ES for which the evaluation values are calculated.

The inspector may be configured to inspect the electrode sheet ES to collect inspection data of the electrode sheet ES. The inspector may be configured to sense defects such as a surface defect of the electrode sheet ES, based on a change in a color of a surface of the electrode sheet ES, a change in reflectivity, etc. The inspector may be configured to collect inspection data of a portion (e.g., overlapping portion) of the first electrode sheet ES1 corresponding to a sensing part.

The inspection data collected by the inspector may include a result of judging the quality of the portion of the electrode sheet ES and a process event. For example, the inspection data may include data about the appearance of the electrode sheet ES collected by an image-based inspection device such as a vision machine, data about disconnections and seams on the electrode sheet ES, data about a portion of the electrode sheet ES on which sampling inspection is performed, data about a portion of the electrode sheet ES to be scrapped, data about the scraped portion of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector may be a color sensor, a seam sensor, a datum point sensor, or a vision machine.

The inspector may be configured to generate coordinate-related inspection data by relating additional coordinate data based on the exhaustion amount signal WAS with the inspection data. To generate the coordinate-related inspection data, the additional coordinate data may be calibrated based on an offset length of the inspector.

The measurement data and the inspection data described above may be time series data. The measurement data and the inspection data may be temporally ordered. Temporal ordering is a main feature of time series data. Temporal ordering is organizing events in an order in which they occur and arrive to be processed. That is, the measurement data and the inspection data may be stored based on a point in time when measurement and inspection are performed, and may be related to time. Accordingly, each of measured values of the measurement data may be matched to time, and each of inspection values of the inspection data may be matched to time.

For example, data of measurement amounts (e.g., an amount of loading on the electrode sheet ES or a thickness of the electrode sheet ES) may include a series of measurement amounts (e.g., amounts of loading on the electrode sheet ES or thicknesses of the electrode sheet ES) and time values related to the series of measurement amounts. The measured amounts and the time values may be matched in a one-to-one manner but are not limited thereto. As another example, defect data may include a value indicating a defect and a time value related to the value indicating the defect. Here, the values indicating defects should be understood to mean that the values include information regarding at least one of the presence of defects and the types of defects.

A roll map may include coordinate-related measurement data and coordinate-related inspection data that are generated by relating measurement data and inspection data, which are time-series data, with coordinate data. Accordingly, the roll map may provide traceability for all processes during performing of a subsequent process or after the shipment of a product.

The roll map controller 141 may be in operative communication with the first and second rotary encoders 121 and 125, the NG sensor 131, the datum point sensor 133, and additional measuring devices and inspectors through a wired or wireless data network. The data network may be unidirectional or bidirectional communication. The data network may be implemented by a physical channel, WiFi, public networks and/or specialized networks using Bluetooth or other frequency bands.. The first and second rotary encoders 121 and 125, the NG sensor 131, the datum point sensor 133, and the additional measuring devices and inspectors may be configured to collect data from equipment, a workpiece, an intermediate product, and a product in the secondary battery manufacturing system 100 or to generate a signal for collecting data from thereof.

The coordinate-related measurement data and the coordinate-related inspection data transmitted from the roll map controller 141 to the process controller 143 may be transmitted to the server 150 through the process controller 143 and the EIF 145. The process controller 143 and the EIF 145 may relay communication of data between the server 150 and the roll map controller 141. However, the present invention is not limited thereto, and the roll map controller 141 may directly transmit the coordinate data, the coordinate-related measurement data, and the coordinate-related inspection data to the server 150.

For control of a process, a communication line for connecting the process controller 143 and the server 150 via the EIF 145 may be installed between the process controller 143 and the server 150. Accordingly, data transmission through the process controller 143 may reduce resources required for the installation of the communication line and enable efficient processing and management of data, compared to a case in which the first and second rotary encoders 121 and 125 and a measuring device directly communicate with the server 150 and a case in which the roll map PLC 141 directly communicates with the server 150.

The EIF 145 may be a device for communication between the process controller 143 of manufacturing equipment and the server 150 that is an upper server.

The server 150 may be configured to generate and store a roll map. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES.

The server 150 may be configured to store the first roll map of the first electrode roll ER1, transmit the defect data DD and the datum point data DPD of the first roll map to the process controller 143, and generate and store the second roll map of the second electrode roll ER2 based on the coordinate-related measurement data and the coordinate-related inspection data.

According to example embodiments, the server 150 may be a data processing system that supports all activities required to manage the manufacture of a secondary battery, such as work schedule management, work instructions, quality control, and work performance aggregation. The server 150 may be, for example, a manufacturing execution system (MES). The server 150 may be configured to perform inputting, processing, outputting, and communication of data necessary for the manufacture of electrodes, including the coating process, a press process, and a slitting process.

According to other example embodiments, the server 150 may be configured to store and process raw measurement data. The server 150 may manage the quality of processing the electrode sheet ES by continuously monitoring the processing of the electrode sheet ES based on the inspection data. According to example embodiments, the server 150 may be a statical process controller (SPC). The server 150 may collect and analyze manufacturing data in almost real time to identify problematic conditions in a timely manner and provide a notification to an operator before potential problems occur.

According to other example embodiments, the server 150 may be, for example, a data warehouse, and store the NG sensing data NSD, the coordinate data, the coordinate-related measurement data, and the coordinate-related inspection data for a long time based on a quality assurance period of a product.

According to other example embodiments, in order to create a roll map, the server 150 may be provided separately from an MES, an SPC, and a data warehouse.

The roll map controller 141, the process controller 143, the EIF 145, and the server 150 may be implemented by hardware, firmware, software, or a combination thereof. For example, the roll map controller 141, the process controller 143, the EIF 145, and the server 150 may include computing devices such as workstation computers, desktop computers, laptop computers, and tablet computers. The roll map controller 141, the process controller 143, the EIF 145, and the server 150 may include a simple controller, a complex processor such as a microprocessor, a CPU, or a GPU, a processor configured by software, dedicated hardware, or firmware. The roll map controller 141, the process controller 143, the EIF 145, and the server 150 may be implemented, for example, by a general-purpose computer or application-specific hardware such as a digital signal processor (DSP), a field programmable gate array (FPGA), or an application specific integrated circuit (ASIC).

The server 150 may include a physical server or a cloud server. The server 150 may provide data and an analysis result to an operator through various frameworks. A framework may include a protocol that supports data transmission so that the display device 160 may visualize data through a user interface and provide updated visualization when new data is calculated by the server 150. The protocol supporting data transmission may use HTML, JavaScript, and/or JSON. The server 150 may transmit a visualization command VC to the display device 160, and the display device 160 may visualize a roll map and display the visualized roll map.

The server 150 may include various types of application programming interfaces (APIs) for storing data in a database and other data management tools. The APIs may also be used to retrieve data from databases of various data management systems. The data management systems may be configured to provide access to a database, pull or retrieve data from the database, and generate metrics. Here, the metrics are a tool for visualizing data. The metrics include measured values generated in a time-series manner and may be used to monitor applications and generate a status warning.

The secondary battery manufacturing system 100 may implement a plug-in architecture together with an API for obtaining data to provide a plug-and-play connection of the NG sensor 131, the datum point sensor 133, and the additional measuring devices and inspectors. Accordingly, resources in a certain process step and a specific site can be easily transferred to different processes and different sites or new resources can be easily introduced into each process step and each site.

A data network between the components of the secondary battery manufacturing system 100 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the secondary battery manufacturing system 100 may further include a manual input system that allows an operator to input manufacturing data. The secondary battery manufacturing system 100 may allow data to be input by an operator with an input tool and a computer-based input of manufacturing data such as Excel file scraping.

According to some embodiments, the operations of the roll map controller 141, the process controller 143, the EIF 145, and the server 150 may be implemented as instructions stored on a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The roll map controller 141 may be implemented by, for example, software configured to collect the coordinate data, the NG sensing data NSD, and the datum point sensing data DSD and transmit the NG sensing data NSD and the datum point sensing data DSD.

The process controller 143 may be implemented by software configured to receive product ID, product recipe, the defect data DD, the datum point data DPD, the NG sensing data NSD, and the datum point sensing data DSD, transmit the NG sensing data NSD and the datum point sensing data DSD, and generate a control signal for controlling the unwinder 111, the rewinder 113, the scrap port 117, and the processing apparatus 119 based on the product ID, the product recipe, the defect data DD, the datum point data DPD, the NG sensing data NSD, and the datum point sensing data DSD. More specifically, the process controller 143 may be implemented by software configured to calculate an offset between datum points based on the datum point data DPD and the datum point sensing data DSD, calibrate the defect data DD based on the offset, and generate a control signal for controlling the unwinder 111, the rewinder 113, the scrap port 117, and the processing apparatus 119 based on the calibrated defect data.

As a non-limiting example, the roll map controller 141 and the process controller 143 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The roll map controller 141 and the process controller 143 may include a power supply, a CPU, an input interface, an output interface, a communication interface, and memory devices. The power supply may be configured to supply power to the other components of the roll map controller 141 and the process controller 143, such as the CPU, the input interface, the output interface, the communication interface, and the memory devices, for the roll map controller 141 and the process controller 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to control communication between modules that implement logic and convert input signals into output operation signals. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the roll map controller 141 and the process controller 143 or between the process controller 143 and the EIF 145.

The EIF 145 may be implemented by software for relaying transmission of data and information between the process controller 143 and the server 150. More specifically, the EIF 145 may be implemented by software configured to control the flow of communication between the process controller 143 and the server 150 and perform error control, synchronization, order control, addressing, multiplexing, routing, format conversion, etc.

The server 150 may be implemented by, for example, software configured to transmit the product ID, the product recipe, the defect data DD and the datum point data DPD to the process controller 143 and generate a roll map based on the coordinate-related measurement data and the coordinate-related inspection data.

However, the above description is provided only for convenience of description, and the roll map controller 141, the process controller 143, the EIF 145, and the server 150 may also result from computing devices, distributed computing devices, processors, firmware, software, routines, and other devices executing routines, and instructions.

An architecture of the secondary battery manufacturing system 100 configured to generate a roll map may be implemented by adding only the roll map controller 141 to the process controller 143, the EIF 145, and the server 150, which are essential elements in the modern process management system. In a system according to example embodiments, resources of an already-installed manufacturing site can be used and additional capital expenditure can be reduced. In addition, applying the same architecture as existing manufacturing equipment to newly constructed manufacturing equipment may lead to improvement of the reliability of the manufacture of a secondary battery, detection/improvement of problematic processes, and effective introduction of new processes.

### (Second Embodiment)

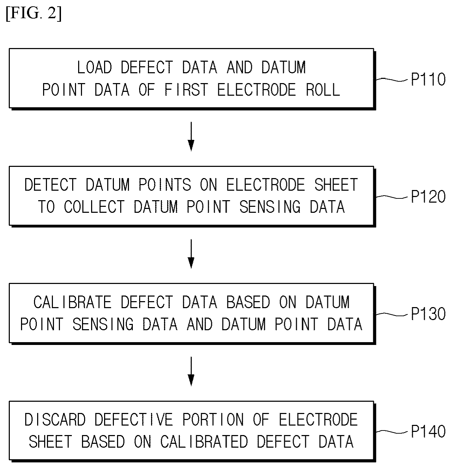

FIG. 2 is a flowchart of a secondary battery manufacturing method according to example embodiments.

Referring to FIGS. 1 and 2, in P110, the defect data DD and the datum point data DPD of the first electrode roll ER1 may be loaded. The process controller 143 may receive the defect data DD and the datum point data DPD of the first electrode roll ER1 from the server 150.

Next, in P120, datum points on the electrode sheet ES may be sensed to collect the datum point sensing data DSD. The datum point sensing data DSD may be collected by the datum point sensor 133 and the roll map controller 141 as described above.

Next, in P130, the defect data DD may be calibrated based on the datum point sensing data DSD and the datum point data DPD. The calibrating of the defect data DD may be performed by triggering sensing of the datum points. The calibrating of the defect data DD may include calculating an offset that is a difference between a sensed coordinate of the datum point sensing data DSD and a coordinate of the datum point data DPD and calibrating the coordinates (i.e., a start coordinate and an end coordinate) of the defect data DD based on the offset.

Thereafter, in P140, the defective portion DES of the electrode sheet ES may be discarded based on the calibrated defect data. To discard the defect portion DES of the electrode sheet ES, the process controller 143 may be configured to generate a signal for controlling the operations of the unwinder 111, the rewinder 113, the scrap port 117, and the processing apparatus 119.

### (Third Embodiment)

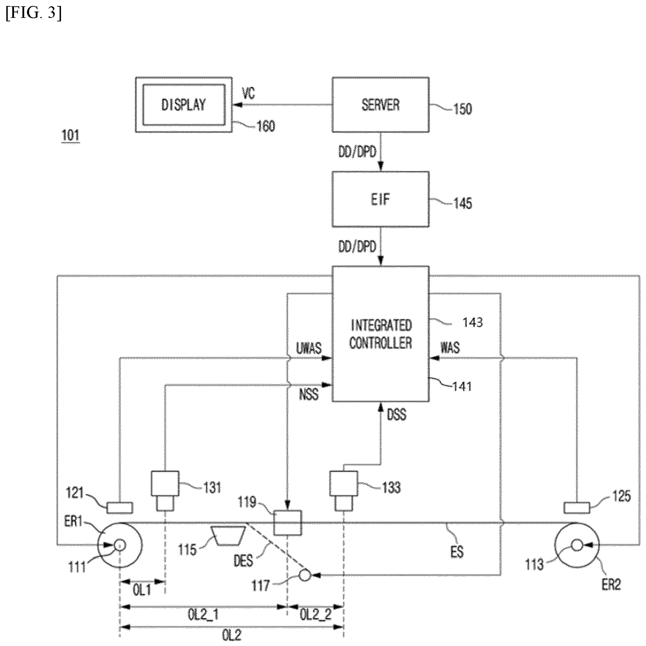

FIG. 3 illustrates a secondary battery manufacturing system 101 according to example embodiments.

Referring to FIG. 3, the secondary battery manufacturing system 101 may include an unwinder 111, a rewinder 113, a splicing table 115, a scrap port 117, a processing apparatus 119, a first rotary encoder 121, a second rotary encoder 125, an NG sensor 131, a datum point sensor 133, an integrated controller 140, an equipment interface (EIF) 145, a server 150, and a display device 160.

The unwinder 111, the rewinder 113, the splicing table 115, the scrap port 117, the processing apparatus 119, the first rotary encoder 121, the second rotary encoder 125, the NG sensor 131, the datum point sensor 133, the EIF 145, the server 150, and the display device 160 are substantially the same as those described above with reference to FIG. 1 and thus a redundant description thereof is omitted here.

The integrated controller 140 may be configured to perform the functions of the roll map controller 141 and the process controller 143 of FIG. 1. Accordingly, the integrated controller 140 may be configured to generate coordinate data based on an input amount signal UWAS or an exhaustion amount signal WAS, collect the NG sensing data NSD (see FIG. 1) and the datum point sensing data DSD (see FIG. 1), and receive defect data DD and datum point data DPD from the server 150 through the EIF 145. The integrated controller 140 may be configured to calibrate the defect data DD based on the datum point sensing data DSD and the datum point data DPD. The integrated controller 140 may be configured to generate a signal for controlling the unwinder 111, the rewinder 113, the scrap port 117, and the processing apparatus 119 based on the calibrated defect data.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing system comprising:
a server configured to store a roll map including defect data indicating a defect of an electrode roll and datum point data indicating a datum point on the electrode roll;
a controller configured to load the defect data and the datum point data from the server; and
a datum point sensor configured to generate a datum point sensing signal by sensing the datum point on an electrode sheet unwound from the electrode roll,
wherein the controller is configured to generate datum point sensing data based on the datum point sensing signal and compare the datum point data with the datum point sensing data.

2. The secondary battery manufacturing system of claim 1, wherein the defect data includes a start coordinate of the defect and an end coordinate of the defect,
the datum point data includes a stored coordinate of the datum point, and
the datum point sensing data includes a sensed coordinate of the datum point.

3. The secondary battery manufacturing system of claim 2, wherein the controller is configured to calibrate the defect data based on the datum point data and the datum point sensing data.

4. The secondary battery manufacturing system of claim 2, wherein the controller is configured to calculate an offset between the stored coordinate of the datum point and the sensed coordinate of the datum point.

5. The secondary battery manufacturing system of claim 4, wherein the controller is configured to calibrate the start coordinate of the defect and the end coordinate of the defect based on the offset.

6. The secondary battery manufacturing system of claim 1, further comprising a roll map controller configured to receive the datum point sensing data and transmit the datum point sensing data to the controller.

7. The secondary battery manufacturing system of claim 1, wherein the datum point sensor is configured to transmit the datum point sensing data to the controller.

8. A secondary battery manufacturing method comprising:
loading defect data indicating a defect of an electrode roll and datum point data indicating a datum point on the electrode roll;
sensing the datum point on an electrode sheet unwound from the electrode roll to collect datum point sensing data; and
calibrating the defect data based on the datum point data and the datum point sensing data to generate calibrated defect data.

9. The secondary battery manufacturing method of claim 8, further comprising discarding a portion of the electrode sheet based on the calibrated defect data.

10. The secondary battery manufacturing method of claim 8, wherein the defect data includes a coordinate of the defect,
the datum point data includes a stored coordinate of the datum point, and
the datum point sensing data includes a sensed coordinate of the datum point.

11. The secondary battery manufacturing method of claim 10, wherein the calibrating of the defect data includes calculating an offset between the stored coordinate of the datum point and the sensed coordinate of the datum point.

12. The secondary battery manufacturing method of claim 11, wherein the calibrating of the defect data includes calibrating a start coordinate and end coordinate of the defect data based on the offset.
